# EUROPÄISCHE PATENTANMELDUNG

(11) **EP 1 316 450 A1**
(43) Veröffentlichungstag der Anmeldung: **04.06.2003**
(21) Anmeldenummer: 02024700.3
(22) Anmeldetag: 06.11.2002
(51) Int. Cl.: B60H 1/32, F25D 21/14

(54) **Fahrzeugklimaanlage mit einem Wärmeübertrager, in dem Kältemittel durch Verdampfen von Kondenswasser gekühlt wird**

(30) Priorität: 01.12.2001 DE 10159148
(71) Anmelder: ROBERT BOSCH GMBH, 70442 Stuttgart (DE)
(72) Erfinder: Leuthner, Stephan, 70372 Stuttgart (DE)

(57) **Zusammenfassung**

Die Erfindung geht von einer Klimaanlage (10) für ein Fahrzeug mit einem Verdichter (12), einem Gaskühler (16), einem Expansionsventil (20) und einem Verdampfer (22) aus, die in einem Kältemittelkreislauf (42) angeordnet sind. Es wird vorgeschlagen, dass in dem Kältemittelkreislauf (42) vor dem Verdampfer (22) ein Wärmeübertrager (14) vorgesehen ist, in dem dem Kältemittel durch Verdampfen von Wasser Wärme entzogen wird.

## Beschreibung

### Stand der Technik

Die Erfindung geht von einer Klimaanlage nach dem Oberbegriff des Anspruchs 1 aus.

Aus der DE 198 06 654 A1 ist eine Klimaanlage für Fahrzeuge bekannt, die als Kältemittel Kohlendioxid verwendet, das in einem Kältemittelkreislauf in einem phasenweise flüssigen bzw. gasförmigem Zustand zirkuliert. Ein Verdichter fördert das Kältemittel in einem Kühlbetrieb über einen Gaskühler, einen inneren Wärmetauscher, eine Expansionseinrichtung, einen Verdampfer und über den inneren Wärmetauscher bei niedrigem Druck zur Saugseite zurück. Dabei gibt das Kältemittel im Gaskühler einen Teil der Wärme ab, die durch die Kompression im Verdichter erzeugt wurde. Einen weiteren Teil überträgt es im inneren Wärmetauscher auf das zur Saugseite des Verdichters zurück strömende kühlere Kältemittel.

In der Expansionseinrichtung wird das Kältemittel auf eine Temperatur expandiert, die unterhalb der Umgebungstemperatur liegt, so dass es im Verdampfer der Luft, die in das Klimagerät einströmt, Wärme entziehen kann und gegebenenfalls die Luft dadurch gleichzeitig trocknet. Die Luft wird dann durch einen nachgeschalteten Heizungswärmetauscher auf die gewünschte Temperatur gebracht. Das beim Trocknen anfallende Kondenswasser wird an die Umgebung abgeführt oder tropft beispielsweise auf die Straße.

Der innere Wärmetauscher ist beispielsweise als Doppelrohrwärmeübertrager nach dem Gegenstromprinzip ausgebildet, wobei der hochdruckseitige Kältemittelstrom aus Festigkeitsgründen im inneren Rohr und der Kältemittelstrom der Saugseite im äußeren Rohr geführt wird. Durch den ständigen Wärmeaustausch zwischen den beiden Kältemittelströmen wird die Kühlwirkung des Gaskühlers unterstützt und die Leistung der Klimaanlage verbessert. Dabei sorgt der innere Wärmetauscher insbesondere in Zeiten extremer Hitze, in denen der Gaskühler nicht in der Lage ist das Kältemittel vor der Expansion genügend zu kühlen, für eine ausreichende Kühlung.

Zudem ist die Dimensionierung der saugseitigen Wärmeübertragungsfläche schwierig, um einen geeigneten Wärmeübergangskoeffizienten bei akzeptablem Druckabfall zu erzielen. In bekannten Klimaanlagen besteht deshalb bei hohen Umgebungstemperaturen die Gefahr, dass das Kältemittel auf der Saugseite vor Eintritt in den Verdichter überhitzt ist. Im Verdichter erfährt es eine weitere Temperaturerhöhung bis in einen Bereich von 150 bis 180°C. Bei diesen hohen Temperaturen kann sich das Schmiermittel zersetzen, welches dem Kältemittel in der Regel beigemischt ist. Zudem erfordern die maximal zu erwartenden Temperaturen entsprechend temperaturbeständige und daher teuere Werkstoffe.

Versuche haben ergeben, dass der Wirkungsgrad einer mit Kohlendioxid betriebenen Klimaanlage bei mittleren Temperaturen unter 33°C gut ist, während er bei hohen Temperaturen über 33°C und im Leerlauf nicht befriedigend ist. Um den Wirkungsgrad zu verbessern, muss dem Verdichter einer solchen Klimaanlage eine größere mechanische Leistung zugeführt werden, wodurch der Kraftstoffverbrauch des Fahrzeugmotors steigt.

### Vorteile der Erfindung

Nach der Erfindung ist in einem Kältemittelkreislauf vor einem Verdampfer ein Wärmeübertrager vorgesehen, in dem dem Kältemittel im Gegenstromprinzip durch Verdampfen von Wasser Wärme entzogen wird. Dazu wird vorteilhafterweise das beim Trocknen der angesaugten Umgebungsluft anfallende Kondenswasser genutzt. Das Kondensat wird in einer Einrichtung am Verdampfer aufgefangen und läuft von dort zum Wärmeübertrager, der zwischen einem inneren Wärmetauscher und einem Expansionsventil angeordnet ist. Hier wird es mit Hilfe einer Einspritzdüse oder in einfacher Weise mit einer Venturidüse der das Kältemittel umströmenden Umgebungsluft zugeführt. Das Wasser zerfällt in viele kleine Tröpfchen, die in der Summe eine sehr große Oberfläche bilden und in der Umgebungsluft verdampfen. Die dafür erforderliche Wärme wird der Umgebungsluft entzogen, so dass sich diese wesentlich unter die Umgebungstemperatur abkühlt.

Im Wärmeübertrager entzieht die abgekühlte Umgebungsluft dem Kältemittel Wärme, so dass dessen Temperatur ebenfalls deutlich unterhalb der Umgebungstemperatur gebracht wird. Unmittelbar danach wird das Kältemittel im Expansionsventil weiter entspannt. Am Verdampfer besitzt das Kältemittel durch die zusätzliche Kühlung mit Hilfe des Wärmeübertragers im Vergleich zu bekannten Klimaanlagen eine größere Enthalpie, so dass der angesaugten Luft wesentlich mehr Wärme entzogen wird und die Kälteleistung des Klimageräts ansteigt. Der Leistungsgewinn ist besonders bei hohen Temperaturen über 33°C und einer entsprechenden Luftfeuchtigkeit über 15-40% interessant, da hier der Effekt ausgenutzt wird, dass gerade bei diesen Bedingungen viel Kondenswasser anfällt, das zum Kühlen im Wärmeübertrager verfügbar ist. Da die Kälteleistung einer Klimaanlage zum einen vom Massenstrom des Kältemittels abhängt, der maßgeblich durch die mechanische Leistung des Verdichters bestimmt wird, und zum anderen von der verfügbaren Verdampfungsenthalpie des Kältemittels, wird durch die erfindungsgemäß erzielte größere innere Energie des Kältemittels der Verdichter entlastet.

Überdies sind auch andere Schaltungen einer Klimaanlage denkbar, beispielsweise zum Schutz des Verdichters. In diesem Fall ist der Wärmeübertrager auf der Saugseite zwischen dem inneren Wärmetauscher und dem Verdichter angeordnet. Bei Bedarf kann das Kältemittel auch auf der Hochdruckseite und auf der Saugseite abgekühlt werden, indem beidseitig Wärmeübertrager installiert werden. Ist der Wärmeübertrager zwischen dem Verdichter und dem Gaskühler angeordnet, wird die Eintrittstemperatur des Kältemittels in den Gaskühler gesenkt. Dies beeinflusst die Werkstoffbeständigkeit des Gaskühler vorteilhaft. Derzeit werden Gaskühler für Fahrzeuge aus Aluminiumlegierungen gefertigt. Bei diesen Werkstoffen nimmt jedoch abhängig von der anliegenden Wechselspahnung, die durch den instationären Betrieb der Kolben des Verdichters entsteht, und abhängig von der Temperatur des zirkulierenden Kältemittels mit der Zeit die Festigkeit ab. Wird der Gaskühler nicht dauernd mit hohen Temperaturen betrieben, die ohne einen vorgeschalteten Wärmeübertrager vorhanden sind, kann dieser beispielsweise mit geringeren Wandstärken bzw. aus wesentlich günstigeren Werkstoffen hergestellt werden. Daraus ergeben sich Gewichts- und Kostenvorteile. Zudem kann der Gaskühler in Bezug auf seine Leistung kleiner ausgelegt werden, da der vorgeschaltete Wärmeübertrager dem Kältemittel schon einen Teil der abzuführenden Wärme entzieht.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Klimaanlage im Kühlbetrieb,
- Fig. 2: eine Variante zu Fig.1 und
- Fig. 3: einen vergrößerten Ausschnitt III nach Fig. 2.

### Beschreibung der Ausführungsbeispiele

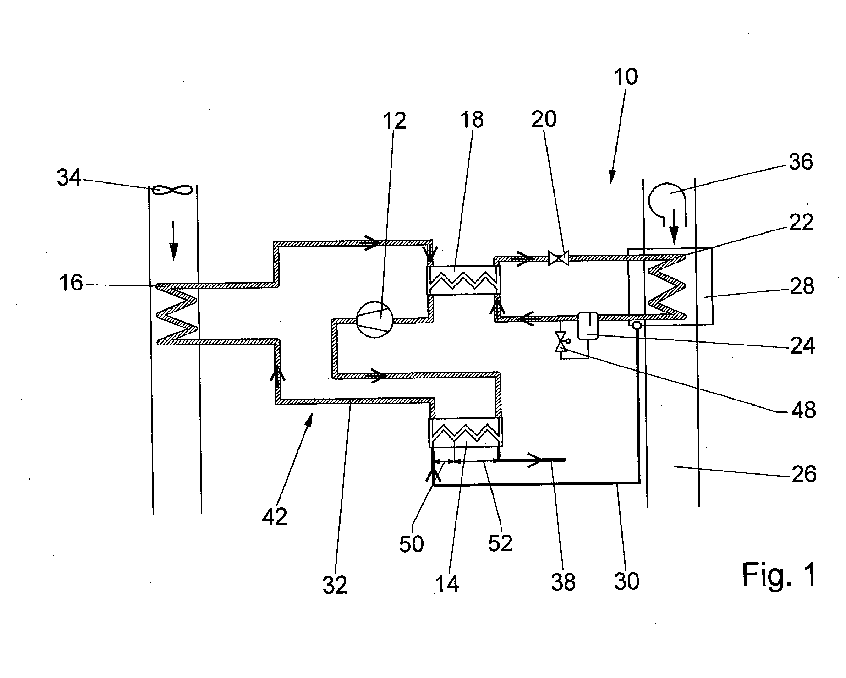

Eine Klimaanlage 10 weist eine Kältemittelleitung 32 auf, in der als Kältemittel Kohlendioxid, CO₂, zirkuliert und einen geschlossenen Kältemittelkreislauf 42 bildet. Fig.1 zeigt die Klimaanlage 10 im Kühlbetrieb, wobei der Strömungsverlauf des Kältemittels durch Pfeile dargestellt ist. Ein Verdichter 12 komprimiert das Kältemittel auf Hochdruck. Dabei erhitzt es sich und strömt dann zur Wärmeabgabe durch einen Wärmeübertrager 14 und anschließend durch einen Gaskühler 16. Ein Ventilator 34 beaufschlagt den Gaskühler 16 mit Umgebungsluft.

Immer noch unter Hochdruck strömt das Kältemittel zu einem inneren Wärmetauscher 18, in dem es weitere Wärme an das zur Saugseite des Verdichters 12 zurück strömende kühlere Kältemittel abgibt. Nach dem inneren Wärmetauscher 18 wird das Kältemittel mit Hilfe eines Expansionsventils 20 auf Verdampfungsdruck entspannt, wobei es sich stark abkühlt, so dass es beim Durchströmen eines nachfolgend angeordneten Verdampfers 22 die in das Klimagerät 26 einströmende Luft kühlt. Ein Gebläse 36 saugt die Luft aus der Umgebung oder einem nicht dargestellten Fahrzeuginnenraum an, die durch das Klimagerät 26 auf eine gewünschte Temperatur gebracht und dabei gleichzeitig getrocknet wird. Das zum Verdichter 12 zurückströmende gasförmige Kältemittel scheidet in einem Sammler 24 das noch vorhandene flüssige Kältemittel aus. Über ein Ventil 48 wird gewährleistet, dass das mit dem flüssigen Kältemittel abgeschiedene Öl wieder zurück in den Kältemittelkreislauf gelangen kann. Ferner nimmt der Kältemitteldampf im inneren Wärmetauscher 18 noch weiter Wärme aus dem verdichteten Kältemittel vor dem Expansionsventil 20 auf und wird danach durch den Verdichter 12 wieder auf die zulässige Verdichtungsendtemperatur von etwa 140 bis 150°C verdichtet.

Aus der Luft, die durch den Verdampfer 22 strömt, kondensiert beim Trocknen Wasser, das in einer Auffangschale 28 gesammelt und über eine Kondensatleitung 30 dem zwischen dem Verdichter 12 und dem Gaskühler 16 angeordneten Wärmeübertrager 14 zugeleitet wird. Das Wasser durchströmt den Wärmeübertrager 14 im Gegen- oder Gleichstrom zum Kältemittel. Beim Durchströmen des Wärmeübertragers 14 erwärmt sich das Wasser in einem ersten Bereich 50 bis zur Siedetemperatur und verdampft in einem zweiten Bereich 52, wobei der Wasserdampf über eine Dampfleitung 38 nach außen abgeführt wird. Das Wasser verdampft hierbei, ohne dass von außen eine mechanische Förderleistung aufzubringen ist. Der Vorteil einer derartigen Anordnung liegt in der Abkühlung des doch sehr heißen Kältemittels vor Eintritt in den Gaskühler 16. Dabei wird der Wärmeentzug im Wärmeübertrager 14 einerseits durch die sehr große Verdampfungsenthalpie des Wassers und andererseits durch einen großen Wärmeübertragungskoeffizienten, bedingt durch dessen Bauweise bzw. das eingesetzte Material, erzielt. Nach der Erfindung ist der Wärmeübertrager 14 in Mikrobauart hergestellt, wobei Materialien wie Kupfer, geeignete Aluminiumlegierungen, Aluminium, Edelstahl und/oder beschichteter Stahl verwendet werden können.

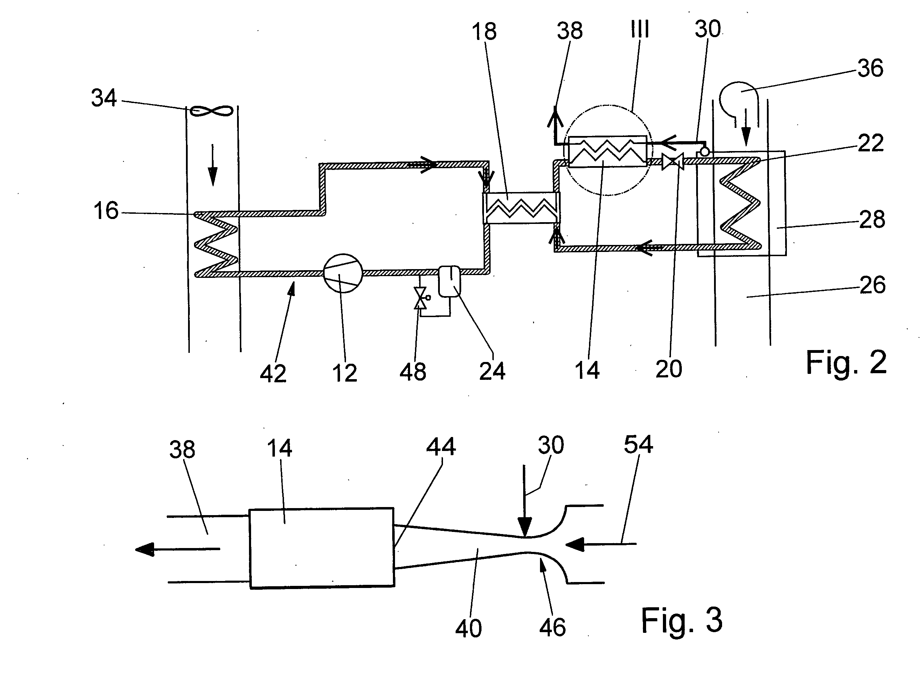

In einer Ausgestaltung der Erfindung ist der Wärmeübertrager 14 zwischen dem Gaskühler 16 und dem Expansionsventil 20 angeordnet (Fig. 2). Zudem ist ihm der innere Wärmetauscher 18 vorgeschaltet. Im Wärmeübertrager 14 wird dem bereits durch den Gaskühler 16 und den inneren Wärmetauscher 18 abgekühlten Kältemittel durch Verdampfen von Wasser weitere Wärme entzogen.

Damit das Wasser im Wärmeübertrager 14 schneller verdampft und um dadurch den Wärmeaustausch zu optimieren, wird es bei der Ausführung der Erfindung nach Fig. 2 in den Wärmeübertrager 14 eingedüst, und zwar zweckmäßigerweise mittels einer Venturidüse 40, die am Eintritt 44 des Wärmeübertragers 14 angeordnet ist und/oder mit diesem eine Baueinheit bildet (Fig.3). Das Wasser wird einem Bereich 46 mit dem kleinsten Strömungsquerschnitt der Venturidüse 40 zugeführt, wo der Druck der zuströmenden Umgebungsluft 54 am geringsten und die Geschwindigkeit am größten ist. Durch die Luftströmung 54 wird Wasser auseinander gerissen und bildet einen Nebel aus feinen Wassertröpfchen, die sehr schnell verdampfen und die dazu erforderliche Wärme der Luft und dem Kältemittel entziehen. Die Luft mit dem darin enthaltenen Wasserdampf wird zweckmäßigerweise der Verbrennungsluft einer nicht dargestellten Brennkraftmaschine zugeführt oder für eine Brennstoffzelle verwendet.

## Patentansprüche

1. Klimaanlage (10) für ein Fahrzeug mit einem Verdichter (12), einem Gaskühler (16), einem Expansionsventil (20) und einem Verdampfer (22), die in einem Kältemittelkreislauf (42) angeordnet sind, **dadurch gekennzeichnet, dass** in dem Kältemittelkreislauf (42) vor dem Verdampfer (22) ein Wärmeübertrager (14) vorgesehen ist, in dem dem Kältemittel durch Verdampfen von Wasser Wärme entzogen wird.

2. Klimaanlage (10) nach Anspruch 1, **dadurch gekennzeichnet, dass** dem Wärmeübertrager (14) Umgebungsluft mit eingedüsten Wassertröpfchen zugeführt wird.

3. Klimaanlage (10) nach Anspruch 1 oder 2, **dadurch gekennzeichnet, dass** dem Wärmeübertrager (14) Kondensat zugeführt wird, das durch eine Einrichtung (28) am Verdampfer (22) aufgefangen wird.

4. Klimaanlage (10) nach einem der vorhergehenden Ansprüche, **dadurch gekennzeichnet, dass** am Eintritt (44) des Wärmeübertragers (14) eine Venturidüse (40) angeordnet ist, in deren Bereich (46) mit dem kleinsten Strömungsquerschnitt der Umgebungsluft Wasser zugeführt wird.

5. Klimaanlage (10) nach einem der vorhergehenden Ansprüche, **dadurch gekennzeichnet, dass** der Wärmeübertrager (14) zwischen dem Verdichter (12) und dem Gaskühler (16) angeordnet ist.

6. Klimaanlage (10) nach einem der Ansprüche 1 bis 4, **dadurch gekennzeichnet, dass** der Wärmeübertrager (14) zwischen dem Gaskühler (16) und dem Expansionsventil (20) angeordnet ist.

7. Klimaanlage (10) nach einem der vorhergehenden Ansprüche, **dadurch gekennzeichnet, dass** dem Wärmeübertrager (14) im Kältemittelkreislauf (42) ein innerer Wärmetauscher (18) vorgeschaltet ist.

8. Klimaanlage (10) nach einem der vorhergehenden Ansprüche, **dadurch gekennzeichnet, dass** der Wärmeübertrager (14) in Mikrobauart hergestellt ist.

9. Klimaanlage (10) nach einem der vorhergehenden Ansprüche, **dadurch gekennzeichnet, dass** der Wärmeübertrager (14) aus Kupfer, einer geeigneten Aluminiumlegierung, Aluminium, Edelstahl und/oder einem beschichteten Stahl und der Gaskühler aus einer Aluminiumlegierung hergestellt ist.

10. Klimaanlage (10) nach einem der vorhergehenden Ansprüche, **dadurch gekennzeichnet, dass** der aus dem Wärmeübertrager (14) austretende Wasserdampf der Verbrennungsluft einer Brennkraftmaschine zugeführt oder für den Betrieb einer Brennstoffzelle verwendet wird.
